# EUROPEAN PATENT SPECIFICATION

(11) **EP 0 677 652 B1**
(45) Date of publication and mention of the grant of the patent: **02.12.1998**
(21) Application number: 95103779.5
(22) Date of filing: 15.03.1995
(51) Int. Cl.: F02F 1/10, F16J 10/04, F02B 77/02

(54) **Linerless engine cylinder block**
Zylinderblock ohne Futterung für Maschinen
Bloc-cylindres sans fourreaux pour moteurs

(30) Priority: 18.03.1994 JP 74317/94
(43) Date of publication of application: 18.10.1995
(73) Proprietor: YAMAHA HATSUDOKI KABUSHIKI KAISHA, Iwata-shi Shizuoka-ken, 438 (JP)
(72) Inventor: Koriyama, Masao, Iwata-shi, Shizuoka-ken, 438 (JP)
(74) Representative: Grünecker, Kinkeldey, Stockmair & Schwanhäusser Anwaltssozietät

(56) References cited:
- BE-A- 463 477
- DE-C- 4 238 525
- GB-A- 524 036

## Description

The present invention relates to a linerless engine cylinder block made of an aluminium alloy comprising at least one cylinder slideably receiving a piston sliding along an inside surface of the cylinder, said piston being connected to a crankshaft by a connecting rod, said inside surface of the cylinder being plated. The invention is characterised by the fact that the inside surface of the cylinder comprises a lower portion, which is left non-plated, specifically adapted to form a seat for a plating tool and defining an area of increased strength and rigidity in connection with an integral skirt section of the cylinder.

Light weight aluminum alloys have been used in the cylinder heads and cylinder blocks of vehicle engines in order to reduce their weight, but since the inside surface of the cylinders against which the pistons slide has but a low resistance to abrasion from friction, cast iron sleeves (liners) are generally installed to make the sliding surface more resistant to abrasion.

However, efforts to make multicylinder engines more compact have taken the approach of directly increasing the abrasion resistance of the inside surface of the cylinders by using a direct chrome or nickel plating process on the aluminum alloy in the cylinders as an alternative to inserting cylinder sleeves.

However, in the above described aluminum alloy sleeveless cylinder blocks, the downward cylinder skirt area below the lower part of the cylinder was present approximately at the lower edge of the piston when at its lower dead point. When the inside surface of the cylinder was plated, a sealing jig had to be aligned with a sealing area located near the bottom end of the cylinder, but it was difficult to secure the required sealing area on the inside surface of the cylinder to provide contact by the sealing jig. In addition, this method caused the area contiguous with the skirt at the bottom end of the cylinder to be weaker than the plated area, with possible ensuing noise when the engine is operating.

Accordingly, it is an objective of the present invention to resolve the above described problems associated with aluminium alloy linerless cylinder blocks of the prior art by providing linerless cylinder blocks that provide an adequate inside-cylinder sealing area for a plating process of an inside surface of the cylinder.

Moreover, the present invention should advantageously allow to strengthen a transitional area between the cylinder and a cylinder skirt area to reduce noise radiation during engine operation from said cylinder skirt section.

In order to perform the aforeindicated objective the present invention improves the linerless engine cylinder block of the type in that the inside surface of the cylinder comprises a lower portion which is left non-plated.

Preferably, said non-plated lower portion extends downward past a lower end of the piston when said piston is in its lower dead centre portion.

According to another preferred embodiment of the present invention there is an inward projecting step formed at the bottom of each of the cylinders defining a lower end of the non-plated lower portion of the inside surface of the cylinder.

The above described configuration, wherein the inside surface of the cylinder has been extended downward, allows an adequate sealing area inside the cylinder to provide a contact surface for the sealing jig during the plating operation of the of the cylinder inside surfaces.

Also, the downward extension of the inside surface of the cylinder improves the strength of the area contiguous with the skirt by allowing thicker walls, thereby decreasing noise during engine operation.

Furthermore, the formation of the step below the cylinder allows inserting the sealing jigs through the cylinder openings in the top surface of the cylinder blocks and their automatic positioning by indexing them against the step below the cylinder. Other preferred embodiments of the present invention are laid down in the further subclaims.

In the following the present invention is explained in greater detail by means of a preferred embodiment thereof in conjunction with the accompanying drawings, wherein:
Figure 1 is a vertical section showing an embodiment of the linerless cylinder block of this invention with a piston positioned at its lower dead centre point,
Figure 2 is a top overall view of the embodiment of the cylinder block shown in Figure 1,
Figure 3 is a perspective overall view of the embodiment of the cylinder block shown in Figure 1,
Figure 4 is a horizontal sectional view of the embodiment of the cylinder block shown in Figure 1, which indicates the location of the water pump and thermostat,
Figure 5 is a horizontal section view of the cylinder block taken along line A-A of Figure 2,
Figure 6 is partial horizontal sectional view of the cylinder block taken along line B-B of Figure 2,
Figure 7 is an illustrative enlargement of the area that joins the lower end of the cylinder and of which the skirt of the cylinder block shown in Figure 5, and
Figure 8 is a vertical section view showing the plating operation for the inside of the cylinders in the cylinder block shown in Figure 6.

An embodiment of the linerless cylinder block of this invention will be described below with reference to the figures.

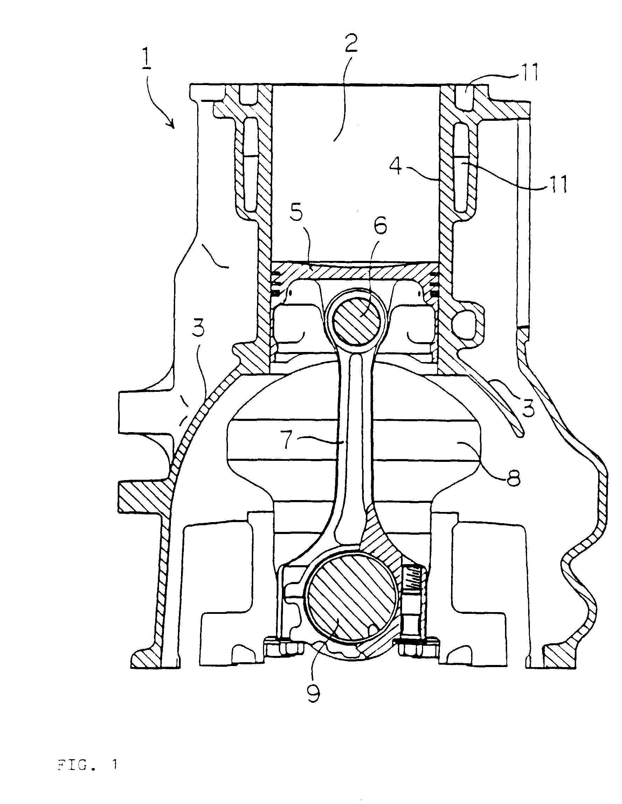

Figure 1 shows a piston positioned at its lower dead point in a linerless cylinder block of this invention. The cylinder skirt area 3 of the cylinder block is formed as a unit which is contiguous with the lower end of the cylinder 2 in the cylinder block 1. Piston 5 slides against the inside surface 4 in the cylinder 2. The piston 5 is linked to a connecting rod 7 by means of a piston pin 6; said rod 7 in turn moves around the surface of a crank pin 9 formed integrally with a balance weight 8 and a crank arm (not shown) in a manner such that the up-down oscillation of the piston causes the crankshaft to rotate.

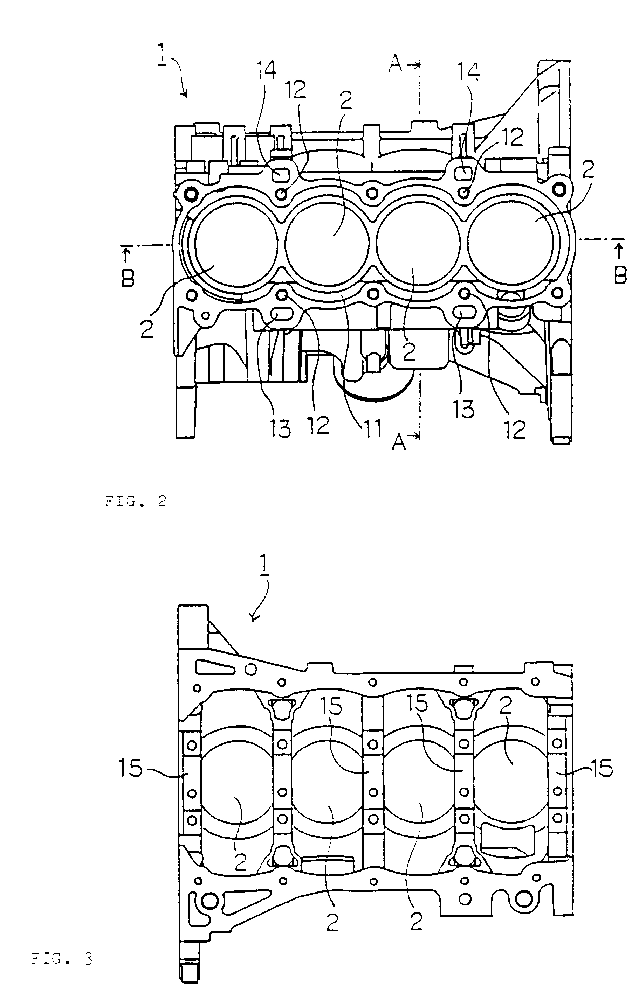

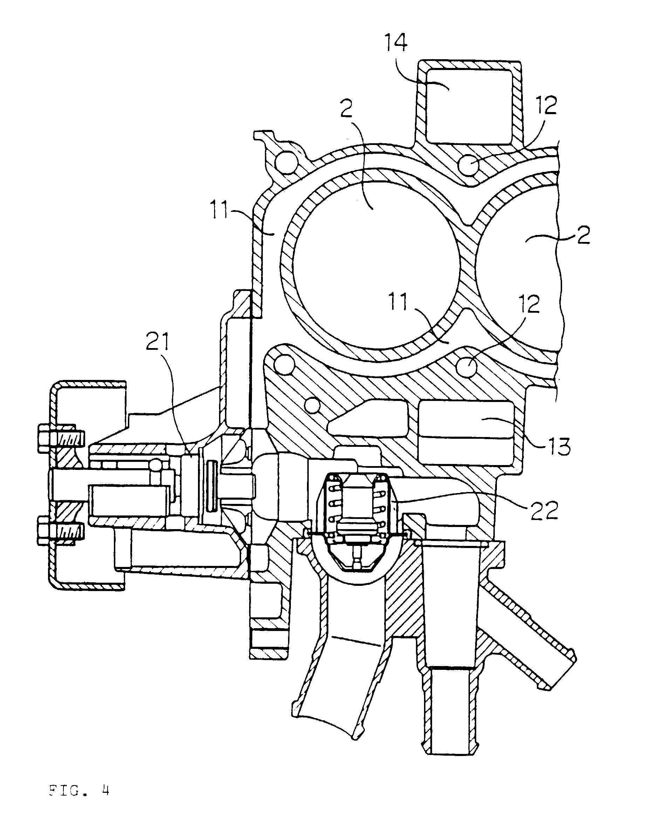

Figures 2 and 3 shows the entire cylinder block, in this case an aluminum alloy integral unit. Four cylinders 2 are aligned in a row in the cylinder block 1. As shown in Figure 2, there is a continuous water jacket 11 with openings in the top surface of the cylinder block 1 around the cylinders 2. Additional openings are shown for left and right bolt holes 12 between the first and second and the third and fourth cylinders, oil drop holes 13 that link the valve chamber formed by the cylinder head and head cover with the crank case, and ventilation holes 14.

A water pump 21 and thermostat 22 control the flow of coolant water for the water jacket 11 in the cylinder block 1, and Figure 4 shows their position relative to the cylinder block 1.

Also, as shown in Figure 3, upper bearing areas 15 for the crank shaft are located below the partition walls between the cylinders 2 in the cylinder block 1 and are thicker than the partition walls between the cylinders; these bearing areas 15 are integrally formed into a bridge-like shape in the cylinder block 1.

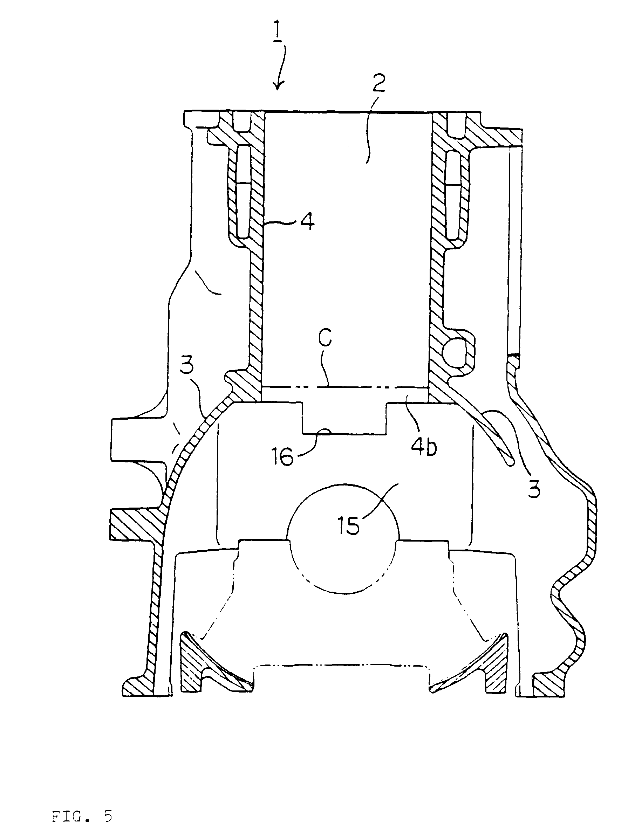

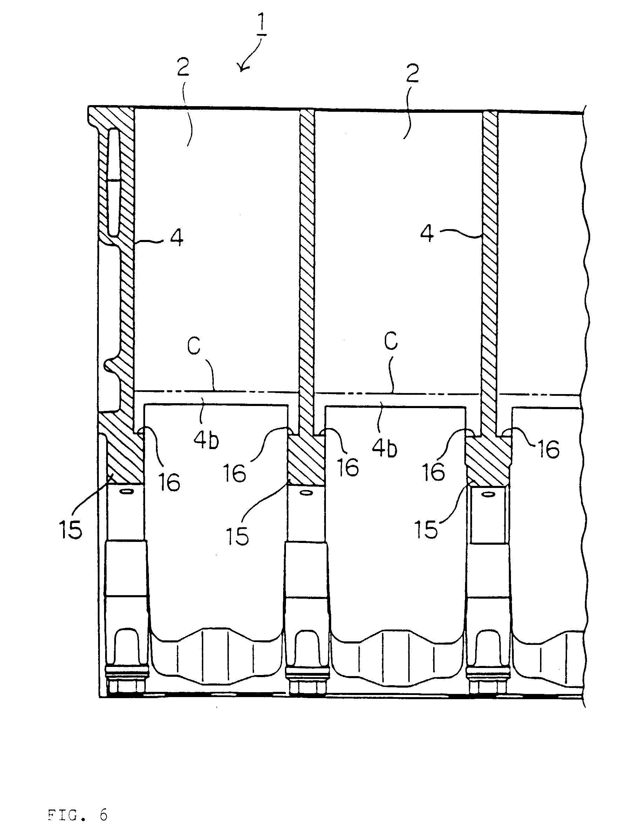

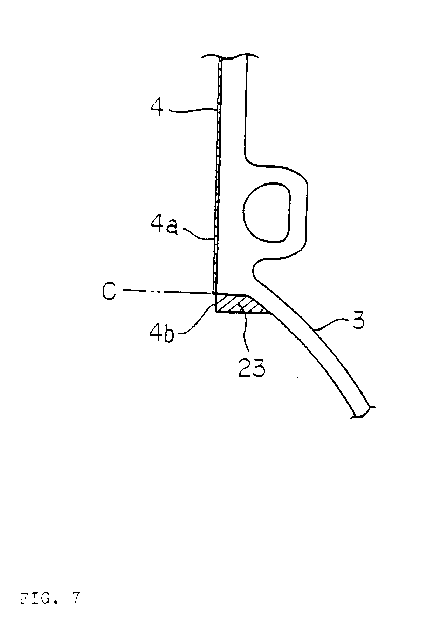

Figures 5 and 6 show that the inside surface 4 for each cylinder 2 in the foregoing cylinder block 1 extends below the lower dead point of the piston shown at position C. Figure 7 shows that a nickel or chrome plating 4a or a Ni-P-Si coat has seen applied to the inner surface of the cylinder above position C, but no plating has been applied to the part of inside cylinder surface 4b that extends below position C.

By extending the inside surface of the cylinder 4 below the bottom edge of the piston at position C, it becomes possible, as shown in Figure 7, to form a thick-walled area 23 where the bottom of the cylinder 2 joins the cylinder skirt area 3.

Further, as shown in Figure 6, a step 16 is formed inside the cylinder block 1 at the bottom of the cylinders 2 and just above the crankshaft upper bearings; it projects circularly from the inside surface of each cylinder 4 toward the cylindrical axis.

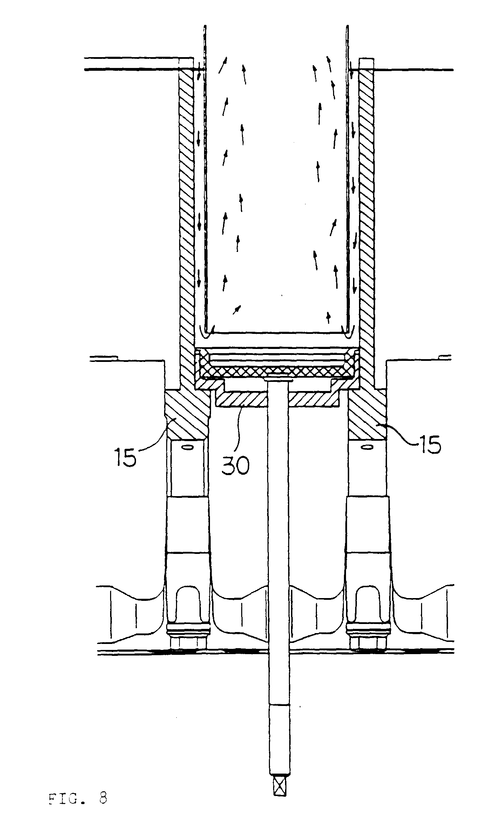

Figure 8 shows the plating operation of the cylinder inside in an aluminum alloy cylinder block 1 of the above described construction. A sealing jig 30 that was inserted into the cylinder 2 from the opening in the top of the cylinder block is automatically positioned by indexing on the step 16 formed above the upper crankshaft bearing areas. The sealing jig 30 completely seals off the bottom opening of the cylinder 2, and allows the upper part of the inside of wall 4 of the cylinder that lies above the seal to be plated by the plating solution that flows into the top opening of the cylinder 2.

The sealing area of the inside cylinder wall 4 in contact with the sealing jig 30 corresponds to the area 4b that lies below position C: the bottom edge of the piston at its lower dead point. Accordingly, the 4b area is not plated. Since the area 4b is outside the area where the piston slides, there is no requirement to increase its abrasion resistance by plating.

As described above, the cylinder block in this embodiment does not require that the sealing jig 30 be inserted from the bottom of the cylinder block 1 into cylinder 2 during the plating process, thereby eliminating any need for cutting away material between the cylinder walls and reducing the thickness at the upper crankshaft bearing areas 15 in order to accommodate the sealing jig. Further, the step areas 16 at the bottom of the cylinders 2 allow the automatic positioning of the seal at the position corresponding to the bottom edge of the piston inside of cylinders 2.

Also, the creation of the extended surface 4b of the inside surface 4 of the cylinder, in addition to allowing space for the sealing surface on the inside of the cylinders and allowing easy positioning of the sealing jig, further allows creating a thick wall area 23 where the bottom of the cylinders 2 joins the skirt area 3, a structure that improves the strength of this area and lowers noise during engine operation.

In linerless cylinder blocks having tightly adjoining cylinders with but thin walls between them, there is little room for heat to escape from the wall areas between the cylinders. However, the heat dissipation from the wall areas between the cylinders, and the cooling properties have been improved in this embodiment by forming the oil drop holes 12 and the ventilation holes 13 just outside the walls between the cylinders. Further, the overall strength of the cylinder block is improved because these oil drop holes 12 and ventilation holes 13 create passages in the vertical direction, thereby further abating the potential for noise.

Also, the linerless cylinder block of this invention provides for good heat dissipation from the cylinders, which allows, as shown in Figure 1, the water jacket 11 to be smaller, and the contact surface area between the piston 5 and cylinder 2 to be decreased.

The above was an explanation of an embodiment of the sleeveless cylinder block of this invention, but the invention is not confined to this specific structure. For example, it goes without saying that the number of cylinders in the block or the structure of the water jacked can be subject to appropriate design modifications.

As explained above, the linerless cylinder block of this invention secures an adequate space inside the cylinder for the contact surfaces of the sealing jig used during the plating operation, simplifies the positioning of the sealing jig, and further allows strengthening the area where the bottom of the cylinder connects to the cylinder skirt area to reduce noise during engine operation.

## Claims

1. Linerless engine cylinder block (1) made of an aluminium alloy comprising at least one cylinder (2) for slideably receiving a piston (5) sliding along an inside surface (4) of the cylinder (2), said piston (5) being connectable to a crankshaft by a connecting rod (7), said inside surface (4) of the cylinder (2) being plated, the inside surface (4) of the cylinder (2) comprising a lower portion (4b) providing a seat for a sealing jig (30) during a plating procedure of the cylindrical inside surface (4) of the cylinder (2), said sealing jig (30) being insertable into the cylinder (2) during the plating treatment whereby said lower portion (4b) is non-plated.

2. Linerless engine cylinder block (1) as claimed in claim 1, **characterized in that,** the lower portion (4b) extends downward past the point, where, in use, a lower end of the piston (5) is in its lower dead centre position.

3. Linerless engine cylinder block (1) as claimed in claim 1 or 2, **characterized in that**, an inwardly projecting step portion (16) is provided defining a lower end of the non-plated lower portion (4b) of the inside surface (4) of the cylinder (2).

4. Linerless engine cylinder block (1) as claimed in at least one of the preceding claims 1 to 3, **characterized in that**, a cylinder skirt area (3) of the cylinder block (1) is formed as a unit which is contiguous with the lower end (4b) of the cylinder (2) forming a thick walled joining area (23) of increased rigidity and strength.

5. Linerless engine cylinder block (1) as claimed in at least one of the preceding claims 1 to 4, **characterized in that**, a plurality of in-line cylinders (2) are provided separated by partitioning walls which are integral with upper crankshaft bearing members (15), respectively, the thickness of said upper crankshaft bearing members (15) being greater than that of the partitioning walls between the cylinders (2).

6. Linerless engine cylinder block (1) as claimed in at least one of the preceding claims 1 to 5, **characterized in that**, said seat for the sealing jig (30) in addition being provided by an annualar step portion (16).

7. Linerless engine cylinder block (1) as claimed in at least one of the preceding claims 1 to 6, **characterized in that**, oil drop holes (13) which, in use, link a valve chamber formed by a cylinder head and cylinder head cover with a crankcase extend vertically through an area between adjacent cylinders (2).

8. Linerless engine cylinder block (1) as claimed in claim 7, **characterized in that**, ventilation holes (12) extend vertically through an area opposite to the oil drop holes (13).

9. Linerless engine cylinder block (1) as claimed in claim 5, **characterized in that**, the cylinders (2) are surrounded by a continuous cooling water jacket (11) opening, in use, at a top surface of the cylinder block (1) around the cylinder (2) towards a cylinder head cooling water jacket.

10. Linerless engine cylinder block (1) as claimed in at least one of the preceding claims 1 to 9, **characterized in that**, left and right bolt holes (13) for receiving cylinder head bolts are provided between adjacent cylinders (2) and at both ends of the row of cylinders (2).

## Patentansprüche

1. Buchsenloser Motor-Zylinderblock (1), der aus einer Aluminiumlegierung besteht, mit zumindest einem Zylinder (2) zur gleitenden Aufnahme eines Kolbens (5), der entlang einer inneren Oberfläche (4) des Zylinders (2) gleitet, wobei dieser Kolben (5) mittels einer Pleuelstange (7) an eine Kurbelwelle anschließbar ist, wobei diese innere Oberfläche (4) des Zylinders (2) plattiert ist und wobei die innere Oberfläche (4) des Zylinders (2) einen unteren Abschnitt (4b) aufweist, der einen Sitz für eine Dichtungs-Spannvorrichtung (30) während eines Plattierungsprozesses der zylinderförmigen inneren Oberfläche (4) des Zylinders (2) bildet, wobei diese Dichtungs-Spannvorrichtung (30) während der Plattierungsbehandlung in den Zylinder (2) einführbar ist, wodurch dieser untere Bereich (4b) unplattiert ist.

2. Buchsenloser Motor-Zylinderblock (1) nach Anspruch 1, **dadurch gekennzeichnet**, daß der untere Bereich (4b) sich nach unten bis über den Punkt erstreckt, bei dem sich im Gebrauch ein unteres Ende des Kolbens (5) sich in seiner unteren Totpunkt-Position befindet.

3. Buchsenloser Motor-Zylinderblock (1) nach Anspruch 1 oder 2, **dadurch gekennzeichnet**, daß ein sich nach innen erstreckender Stufenabschnitt (16) vorhanden ist, der ein unteres Ende des unplattierten unteren Bereichs (4b) auf der inneren Oberfläche (4) des Zylinders (2) festlegt.

4. Buchsenloser Motor-Zylinderblock (1) nach zumindest einem der vorstehenden Ansprüche 1 bis 3, **dadurch gekennzeichnet**, daß ein Zylinderrandbereich (3) des Zylinderblockes (1) als eine Einheit ausgebildet ist, die an dem unteren Ende (4b) des Zylinders (2) angrenzt, das einen dickwandigen Verbindungsbereich (23) mit erhöhter Härte und Festigkeit bildet.

5. Buchsenloser Motor-Zylinderblock (1) nach zumindest einemder vorstehenden Ansprüche 1 bis 4, **dadurch gekennzeichnet**, daß eine Vielzahl von in Reihe angeordneten Zylindern (2) vorhanden sind, die mittels Trennwänden voneinander getrennt sind, die einstückig mit den oberen Kurbelwellen-Lagerelementen (15) ausgebildet sind, wobei die Stärke dieser oberen Kurbelwellen-Lagerelemente (15) größer ist als diejenige der Trennwände zwischen den Zylindern (2).

6. Buchsenloser Motor-Zylinderblock (1) nach zumindest einemder vorstehenden Ansprüche 1 bis 5, **dadurch gekennzeichnet**, daß dieser Sitz für die Dichtungs-Spannvorrichtung (30) zusätzlich mit einem ringförmigen Stufenbereich (16) versehen ist.

7. Buchsenloser Motor-Zylinderblock (1) nach zumindest einem der vorstehenden Ansprüche 1 bis 6, **dadurch gekennzeichnet**, daß Öltropflöcher (13), die im Betrieb eine von einem Zylinderkopf und einem Zylinderkopfdeckel gebildete Ventilkammer mit einem Kurbelgehäuse verbinden, sich vertikal durch einen Bereich zwischen aneinander angrenzenden Zylindern (2) erstrecken.

8. Buchsenloser Motor-Zylinderblock (1) nach Anspruch 7, **dadurch gekennzeichnet**, daß Ventilationslöcher (12) sich vertikal durch einen Bereich erstrecken, der diesen Öltropflöchern (13) entgegengesetzt ist.

9. Buchsenloser Motor-Zylinderblock (1) nach Anspruch 5, **dadurch gekennzeichnet**, daß die Zylinder (2) von einem zusammenhängenden Kühlwassermantel (11) umgeben sind, der im Betrieb bei einer oberen Oberfläche des Zylinderblockes (1) um den Zylinder (2) sich in Richtung eines Zylinderkopf-Kühlwassermantels hinein öffnet.

10. Buchsenloser Motor-Zylinderblock (1) nach zumindest einem der vorstehenden Ansprüche 1 bis 9, **dadurch gekennzeichnet**, daß linke und rechte Bolzenlöcher (13) zur Aufnahme von Zylinderkopfbolzen zwischen aneinander angrenzenden Zylindern (2) und an beiden Enden der Reihe von Zylindern (2) angeordnet sind.

## Revendications

1. Bloc-cylindres sans fourreau pour moteur (1) réalisé dans un alliage d'aluminium comprenant au moins un cylindre (2) destiné à recevoir en coulissement un piston (5) coulissant le long d'une surface intérieure (4) du cylindre (2), ledit piston (5) pouvant être connecté à un vilebrequin au moyen d'une bielle (7), ladite surface intérieure (4) du cylindre (2) recevant un revêtement, la surface intérieure (4) du cylindre (2) comprenant une partie inférieure (4b) procurant un siège pour un gabarit d'étanchéité (30) au cours d'un procédé de revêtement de la surface intérieure cylindrique (4) du cylindre (2), ledit gabarit d'étanchéité (30) pouvant être introduit à l'intérieur du cylindre (2) au cours du traitement de revêtement, grâce auquel ladite partie inférieure (4b) se subit pas de revêtement.

2. Bloc-cylindres sans fourreau pour moteur (1) selon la revendication 1, caractérisé en ce que la partie inférieure (4b) s'étend vers le bas au delà du point où, en utilisation, une extrémité inférieure du piston (5) est en position de point mort bas.

3. Bloc-cylindres sans fourreau pour moteur (1) selon la revendication 1 ou la revendication 2, caractérisé en ce qu'il est fourni une partie de gradin en saillie vers l'intérieur (16) définissant une extrémité inférieure de la partie inférieure non revêtue (4b) de la surface intérieure (4) du cylindre (2).

4. Bloc-cylindres sans fourreau pour moteur (1) selon au moins l'une des revendications précédentes 1 à 3, caractérisé en ce qu'une surface de jupe de cylindre (3) du bloc-cylindres (1) est formée de manière monobloc et est contiguë à l'extrémité inférieure (4b) du cylindre (2), formant une surface de connexion à paroi épaisse (23) dont la rigidité et la résistance sont accrues.

5. Bloc-cylindres sans fourreau pour moteur (1) selon au moins l'une des revendications précédentes 1 à 4, caractérisé en ce qu'une pluralité de cylindres en ligne (2) est aménagée de manière séparée par des parois de séparation qui font partie intégrante, respectivement, des éléments de palier de vilebrequin (15), l'épaisseur desdits éléments supérieurs de palier de vilebrequin (15) étant supérieure à celle des parois de séparation disposées entre les cylindres (2).

6. Bloc-cylindres sans fourreau pour moteur (1) selon au moins l'une des revendications précédentes 1 à 5, caractérisé en ce que ledit siège destiné au gabarit d'étanchéité (30) complémentaire est fourni par une partie de gradin annulaire (16).

7. Bloc-cylindres sans fourreau pour moteur (1) selon au moins l'une des revendications précédentes 1 à 6, caractérisé en ce que des orifices d'écoulement d'huile (13) qui, en utilisation, relient une chambre de soupape formée par une culasse et un cache-culasse avec un carter moteur, s'étendent verticalement sur une surface située entre des cylindres adjacents (2).

8. Bloc-cylindres sans fourreau pour moteur (1) selon la revendication 7, caractérisé en ce que des orifices de ventilation (12) s'étendent verticalement au travers d'une surface opposée aux orifices d'écoulement d'huile (13).

9. Bloc-cylindres sans fourreau pour moteur (1) selon la revendication 5, caractérisé en ce que les cylindres (2) sont entourés par une chemise d'eau de refroidissement continue (11) s'ouvrant, en utilisation, sur une surface supérieure du bloc-cylindres (1) autour du cylindre (2) vers une chemise d'eau de refroidissement de culasse.

10. Bloc-cylindres sans fourreau pour moteur (1) selon au moins l'une des revendications précédentes 1 à 9, caractérisé en ce que des orifices pour boulons gauche et droit (13) destinés à recevoir des boulons de culasse sont aménagés entre des cylindres adjacents (2) et aux deux extrémités de la rangée de cylindres (2).
